# EUROPEAN PATENT APPLICATION

(11) **EP 4 687 058 A1**
(43) Date of publication of application: **04.02.2026**
(21) Application number: 24191449.8
(22) Date of filing: 29.07.2024
(51) Int. Cl.: G06F 30/10, G06F 30/20, G06F 30/27, G06N 20/00, G05B 19/418

(54) **ELECTRIC SYSTEM DIMENSIONING**

(71) Applicant: ABB SCHWEIZ AG, 5400 Baden (CH)
(72) Inventor: STARK, Katharina, 69469 Weinheim (DE); LI, Boda, 68165 Mannheim (DE); HOERNICKE, Mario, 76829 Landau (DE)
(74) Representative: Maiwald GmbH

(57) **Abstract**

A computer-implemented data preparation process for dimensioning an electrical power supply system for an industrial automation system is provided. The process comprises: obtaining a component datasheet for at least one component of the industrial automation system; using a machine learning algorithm to extract dimensioning-relevant data from the obtained component datasheet; and selecting an appropriate component model for the component based on the extracted dimensioning-relevant data.

## Description

### FIELD OF THE INVENTION

The invention relates to a computer-implemented data preparation process for the dimensioning of an electrical power supply system for an industrial automation system, and to a process for dimensioning an electrical power supply system for an industrial automation system.

### BACKGROUND

Industrial automation systems comprise components such as motors that require electric power. When the basic concept for the automation system has been established, it is necessary to dimension the electrical power supply system so that the components of the automation system can be appropriately supplied with electric power. Dimensioning means the sizing and/or rating of equipment and components to be used in the electrical power supply system. Dimensioning is performed in compliance with various industry standards which specify technical rules governing for example overload protection, short-circuit protection, protection against electric shock, and so on. Typically, a list of components of the automation system is passed from automation engineering to electrical engineering. Component data sheets for the listed components are manually obtained and reviewed by electrical engineers to determine the requirements of the electrical power supply system. Component data sheets might be downloaded from the internet or stored locally. With this hand-picked data, one creates a model of the power supply system so that it can be simulated. Simulation enables the power supply system to be tested according to required examinations to ascertain that it meets the relevant standards. The verified system can then be used for the power supply for the industrial automation system. This manual approach is time-consuming, prone to human error, and often requires a high level of expertise.

### SUMMARY

There is a need for an improved process that automates these tasks to avoid human error, reduce time consumption, and ensure compliance with industry standards.

The present invention addresses the aforementioned needs by providing, in a first aspect, a computer-implemented data preparation process for the dimensioning of an electrical power supply system for an industrial automation system. The process comprises:
obtaining a component datasheet for at least one component of the industrial automation system;
using a machine learning algorithm to extract dimensioning-relevant data from the obtained component datasheet; and
selecting an appropriate component model for the component based on the extracted dimensioning-relevant data.

In this way, the invention employs artificial intelligence (Al) to enhance the data preparation process by automating the analysis of component datasheets and the selection of appropriate models for electrical simulation purposes. The invention reduces human error by leveraging AI for the data extraction. In this way, the invention facilitates suitable dimensioning of the electrical power supply system via rigorous simulation in a later dimensioning process.

### Document retrieval

Obtaining the component datasheet may comprise accessing a data source where component datasheets for components of the industrial automation system are obtainable. Obtaining the component datasheet may comprise first locating the component datasheet. Before obtaining the component datasheet, the process may comprise obtaining a component list which identifies components to be used in the industrial automation system including the said at least one component. The component datasheet for the at least one component may be automatically obtained based on the component list.

The process may comprise accessing a data source where component datasheets for various components of the industrial automation system are obtainable. The data source may comprise any database or online repository, such as an internet page (for example on the vendor website), an ftp-server, cloud storage, a server, a local folder (optionally identified using a pre-provided file path), or an asset administration shell (AAS), for example. The data source may be searched to identify relevant component datasheets based on the component list. The process may further comprise updating the data source with new component datasheets as they become available.

The process may comprise data augmentation for handling missing dimensioning-relevant data. The process may comprise ascertaining that component datasheets for all components listed in the component list have been obtained. In the case that one or more component datasheets are missing, the data augmentation may comprise requesting manual input of the missing component datasheets or directly the relevant data. The process may comprise ascertaining that the component datasheet for the at least one component comprises all required dimensioning-relevant data. In the case that required dimensioning-relevant data are missing from the component datasheet, the data augmentation may comprise requesting manual input of the missing data. The data augmentation may comprise providing default values when required dimensioning-relevant data is missing.

### Data extraction

Once the component datasheet for the at least one component is obtained, the machine learning algorithm processes the component datasheet to extract the dimensioning-relevant data therefrom. The machine learning algorithm may be trained to handle component datasheets having various formats, such as pdf files, text files (e.g. Microsoft Word), list-based files like Excel-tables, extractions from a database, XML-based data, or digital formats like an asset administration shell (AAS). The machine learning algorithm may employ at least one data extraction technique to extract the dimensioning-relevant data. Examples of data extraction techniques include use of one or more of the following: text or image recognition; natural language processing (NLP), optical character recognition (OCR); regular expression pattern; rule-based algorithm; large language model (LLM); classification algorithm; pattern-recognition algorithm; process mining algorithm; generative Al algorithm.

The extracted dimensioning-relevant data may optionally be consolidated and/or assimilated into a common format. The dimensioning-relevant data may pertain to electrical characteristics, physical dimensions, thermal properties, and/or other pertinent data useful or necessary for the dimensioning process.

The process may comprise storing the extracted dimensioning-relevant data for the at least one component in data storage for use in relation to another component of the same type, for example for use in connection with a different project. The data storage may thus comprise dimensioning-relevant data for different components from different vendors, for reducing future engineering effort. The dimensioning-relevant data may be stored in association with component type information, comprising for example a unique identifier of the component type.

### Model selection

Based on the extracted dimensioning-relevant data, an appropriate component model for the at least one component is selected. The component model may comprise at least one of the following: a dedicated model for the component (provided by the vendor, for example); a dedicated model for a type of the component; a generic model for the component; a generic model for the type of the component; a timeseries; a value of at least one parameter describing the component. Selecting the appropriate component model may comprise selecting, from a plurality of available component models, the most accurate component model for the at least one component, or, more specifically, the most accurate component model for the at least one component that is available and usable. The machine learning algorithm may be trained to match the extracted dimensioning-relevant data with at least one pre-existing component model, stored for example in a model repository. Alternatively, selecting the component model may comprise using generative AI to generate a component model for the at least one component and selecting the generated component model. The machine learning algorithm may be trained to generate the new component model for the component that accurately represents behaviour of the component in the electrical power supply system. For example, generating the new component model may comprise taking a pre-existing component model for the component and filling out missing properties. The pre-existing component model may comprise simulation logic for the component, while the missing properties may relate to configuration/parameters. These models might be made available by the vendor, e.g. as an FMU or in another format, or by a simulation tool used for electrical simulation. Using such models, components like a pump or a motor can be configured. Alternatively, the pre-existing model may be retrieved from a model library comprising such models for various component types. Different pre-existing models in the libraries may require different data/properties for completion. The process then comprises selecting the pre-existing model, so as to generate the component model according to the extracted data. One or more of the pre-existing component models may comprise additional optional properties that make the model more exact (or that are to be used instead of default values).

According to a second aspect, a process for dimensioning an electrical power supply system for an industrial automation system is provided. The process comprises:
carrying out the data preparation process of the first aspect;
simulating power supply by the electrical power supply system to the industrial automation system using the selected component model; and
dimensioning the electrical power supply system to determine a configuration thereof that meets at least one requirement based on the simulation.

### Simulation

With the model selected, the process proceeds to the simulation phase, which comprises simulating power supply by the electrical power supply system to the industrial automation system using the selected component model. The process may comprise entering the extracted dimensioning-relevant data for the at least one component into the selected component model and using the so-completed component model for the purposes of the simulation. That is, the fitting values retrieved during the data extraction phase (or at least a subset thereof, as they could fit different kinds of model) are entered (automatically) into the selected component model. The simulation may be carried out using at least one pre-existing simulation tool. The process may comprise selecting the at least one simulation tool based on its compatibility with the selected component model.

Simulating power supply by the electrical power supply system may comprise undertaking at least one examination to determine whether the electrical power supply system meets the at least one requirement. The examination may comprise a static state analysis. Additionally or alternatively, the examination may comprise a dynamic transient analysis. The at least one requirement may state that the electrical power supply system is to be operable in the worst-case scenario. In this case, the simulation may be carried out using worst-case operational conditions, for example, system maximum load operating point, maximum renewable energy output point, or the like. The at least one requirement may state that the electrical power supply system is to reduce or minimize costs, for example using at least one peak shaving or load shifting technique. The at least one requirement may state that the electrical power supply system is to utilize at least one source of renewable energy that is available in the electrical power supply system. The at least one requirement may state that the electrical power supply system is to meet at least one relevant industry standard, which specifies for example technical rules governing for example overload protection, short-circuit protection, protection against electric shock, and so on. Any combination of two or more requirements may be applicable. Thus, the simulation may consider various operational scenarios and conditions to ensure the reliability and performance of the electrical power supply system.

### Dimensioning

The simulation is then used in the dimensioning phase to find a suitable configuration of the electrical power supply system. The configuration of the electrical power supply system to be determined may comprise the layout, sizing, and/or rating of its electrical equipment. Dimensioning the electrical power supply system may thus comprise determining a layout of the electrical power supply system. By "layout" is meant a topology, i.e. the selection and interconnection of equipment to perform a specified function. Additionally or alternatively, dimensioning the electrical power supply system may comprise determining a sizing and/or rating of electrical equipment to be used in the electrical power supply system. The dimensioning may comprise setting up an initial electrical power supply system for the at least one simulation, and either accepting or modifying the initial electrical power supply system based on its simulated performance. The initial electrical power supply system may be set up according to one or more predetermined rules, derived from prior projects, for example. If the initial electrical power supply system fulfils the at least one requirement, it is accepted. This system then forms the output of the dimensioning process. If the initial electrical power supply system does not fulfil the at least one requirement, the initial electrical power supply system is modified, for example by adding, removing, or changing electrical equipment, for example to compensate for harmonics, or otherwise to improve electrical performance of the system. The modified electrical power supply system is then simulated and its performance reevaluated. These steps may be repeated until the modified electrical power supply system satisfies the at least one requirement.

### Implementation and operation

The so-dimensioned electrical power supply system may be implemented in a further phase of development, that is, brought into an operational state. In a subsequent, operational phase, the electrical power supply system may be operated to supply electric power to the industrial automation system. The industrial automation system, when powered by the electrical power supply system, carries out a process for producing a product.

### Machine learning algorithm

The machine learning algorithm may be trained by a user on the basis of labelled training data to carry out the data extraction, optionally also document retrieval, optionally also the model selection steps described herein. The machine learning algorithm may be trained using supervised learning, on the basis of user-labelled training data. Alternatively, deep reinforcement learning may be used to train the algorithm. Multiple machine learning models may be trained to carry out respective steps of the process.

According to a second aspect, there is provided a computing system configured to carry out the process of the first aspect.

According to a third aspect, there is provided a computer program (product) comprising instructions which, when executed by a computing system, enable or cause the computing system to carry out the process of the first aspect.

According to a fourth aspect, there is provided a computer-readable (storage) medium comprising instructions which, when executed by a computing system, enable or cause the computing system to carry out the process of the first aspect. The computer-readable medium may be transitory or non-transitory, volatile or non-volatile.

According to a fifth aspect, there is provided an electrical power supply system dimensioned using the process of the first aspect.

According to a sixth aspect, there is provided an industrial automation system comprising the electrical power supply system of the fifth aspect.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, may comprise calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawings, in which:-
FIG. 1 is a flowchart representing a process for dimensioning an electrical power supply system;
FIG. 2 illustrates relative accuracy of various component models; and
FIG. 3 illustrates a portion of a datasheet labelled by a user for use as training data.

### DETAILED DESCRIPTION

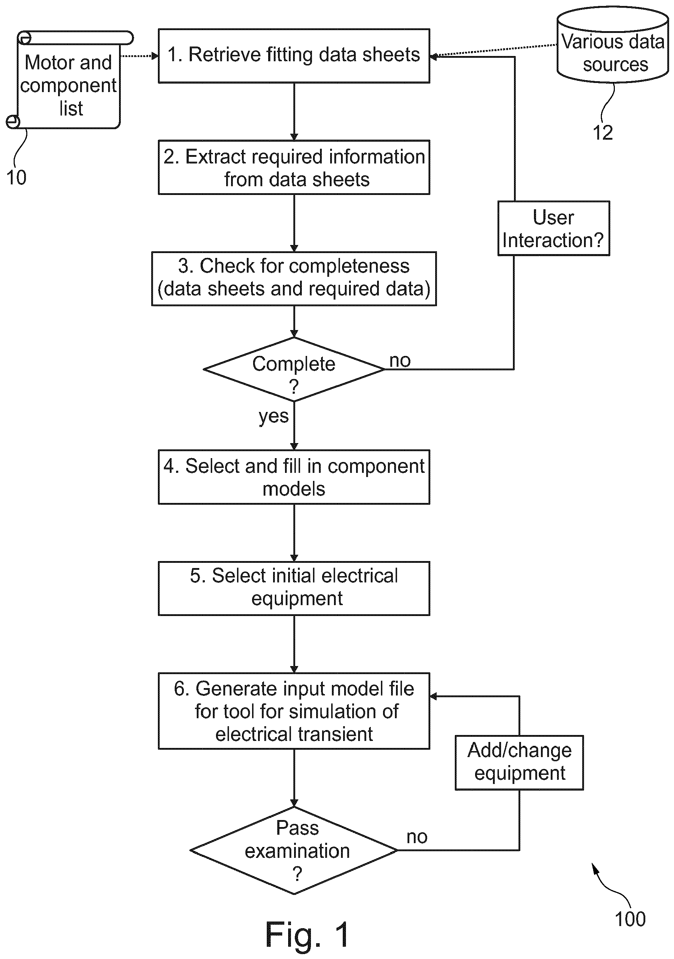

FIG. 1 is a flowchart representing a process 100 for dimensioning an electrical power supply system.

Step 1 comprises retrieving fitting (suitable) datasheets for components identified in a motor and component list 10 which identifies the motors and components for which datasheets are required. The datasheets may be obtained from various data sources 12 such as internet pages, ftp-server, cloud storages, servers, AAS, or local folders.

Step 2 comprises extracting the required information from the obtained datasheets. An Al-based algorithm is used to go through the datasheets and find the required information. The algorithm is trained by the user to find the required information (e.g. with labelling or correction). The extracted information is optionally stored in data storage for use in connection with another component of the same type, for example for a different project.

The Al-based algorithm may be trained to carry out text or image recognition in a manner which depends on the format of the datasheet, which may take the form of a PDF. The following non-exhaustive list contains non-limiting examples of data extraction techniques that may be employed by the Al-based algorithm, in any permutation:-
- OCR technique to extract text from the datasheet;
- Regex pattern, e.g. to extract dates, serial numbers, version numbers or similar;
- Rules-based algorithm, e.g., when dealing with unit X, there are always subsequent steps 1,2,3,... ,n.
- NLP-based algorithm;
- Use of an LLM model;
- Classification algorithm, which learns to classify datasheets depending on the vendor and/or type of equipment (datasheets from certain vendors or for certain equipment types may have an expected format, information which can be used by a subsequent data extraction technique);
- Pattern-recognition algorithm, to find patterns indicating for example that data from vendor X usually contains a table in section 3 that provides the required data or that the required data is named in a certain, different way for vendor Y;
- Process mining algorithm, e.g., to mine datasheets or historical data, to extract values for timeseries to be used in equipment modelling.

In an example, a generative Al algorithm is employed to learn patterns in datasheets and to learn what values are typical for which information and thus to carry out plausibility checks on the extracted data. The algorithm leverages understanding of component modelling, for example that a pump may be modelled by a pump model or equivalently as a motor, and categorizes pre-existing models from a modelling tool accordingly. One suitable classification system is provided by ECLASS (described at https://eclass.eu/) in which generic object types (ending with "0000") subsume more specific object types (having other numbering in the last four digits). This system may be further utilized to check keywords. Once the type of the component is determined (from the component list and possible models have been identified), the algorithm determines whether the required parameters for that model (or for any of the models) are available in the datasheet.

By means of the above-mentioned techniques, the relevant data is extracted from the datasheets. The extracted data may be stored in a storage that holds the relevant data for different equipment from different vendors. Device type information such as a unique identifier of the type may be used to avoid mixing data from different device types. In case the same device type in the same version reappears during a future project, the data from the storage can be used instead of the datasheet, to save time.

Step 3 comprises a check for completeness. A first check is made as to whether all required datasheets are obtained. If this is not the case, a list of the missing datasheets is provided to the user. The user can identify new data sources, for example another folder on the hard drive or an Internet page or select the respective, missing datasheet as a file and provide it manually. A further check is made as to whether the obtained datasheets contain the required data. If this is not the case, a list of missing data for each component type is provided to the user. The user can provide manual assistance in finding the data within the datasheet. Alternatively, the user can manually enter the data, for example equivalent resistance and reactance or the power capacity. For some electrical equipment, default values may be provided when the required data is missing. Once the check for completeness is passed, the process proceeds to step 4.

Step 4 comprises selecting and filling in component models. Based on the data that is available for the respective component, the most accurate component model that is available is selected. The data for the respective component is filled into the selected component model.

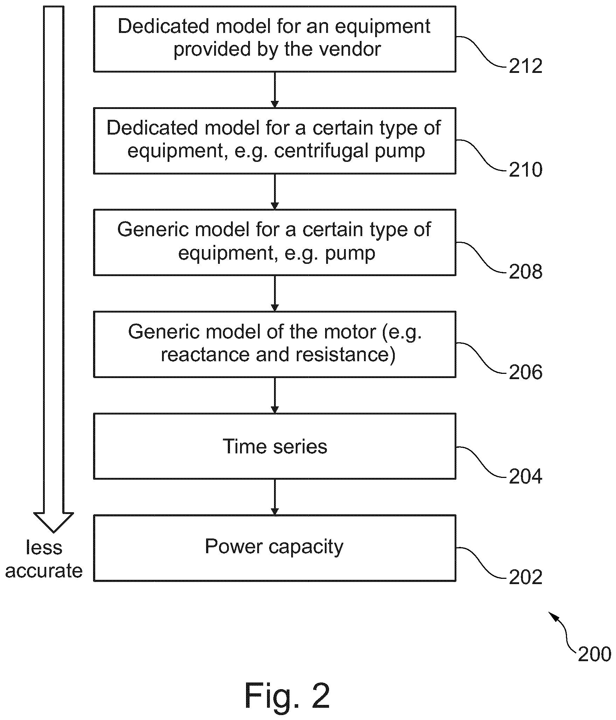

With reference to FIG. 2, various process equipment models 200 may be available for selection which differ in accuracy. In the case of a pump, for example, the pump motor may be modelled most simply as a load based on its power capacity 202. In an example, a timeseries 204 comprising input data and output data obtained from the equipment may be used to derive an equipment model. Alternatively, the motor of the pump may be modelled as a generic motor 206 using for example its equivalent reactance and resistance. Alternatively, a generic pump model 208 may be made available, for example by a simulation tool. Since the pump motor behaves differently than other kinds of motor, for example a valve motor, the generic pump model, being specific to a certain type of equipment - pump, may be more accurate than the generic motor model. Yet more preferably, the simulation tool may provide a model 210 which is dedicated to a certain subtype of equipment, e.g. a centrifugal pump instead of a generic pump. Most accurately, a dedicated model 212 for the equipment to be modelled may be available from the vendor, provided for example when the equipment was acquired or otherwise retrievable from somewhere, e.g. the internet or an AAS. The dedicated model 212 for the equipment, being specific to that equipment, is likely the most accurate, and may therefore represent the preferred model if available and usable. By "usable" is meant that the format in which the model is provided can be used by the simulation tool. It may not be the case that every model is usable by every simulation tool. Examples of simulation tools which may be used include PPSim from ABB, PowerFactory from DlgSILENT or PSCAD from Manitoba Hydro International Ltd.. In case an available model is accurate but incompatible with the targeted simulation tool, the next most accurate model that is available and usable is selected.

Returning to FIG. 1, step 5 comprises selecting initial electrical equipment for the electrical power supply system. Based on a set of rules or learnings from prior projects, an initial set of electrical equipment is added to a model of the electrical power supply system. The selected models of the components identified in the motor and component list are added to this model.

Step 6 comprises generating an input model file for the simulation tool and running a simulation. Based on the tool that should be used for electrical simulation, an input model file is generated containing the selected component models as loads along with the initial set of electrical equipment. This file is used for a series of simulations which subject the initial set of electrical equipment to a number of examinations. The examinations may be divided into two types: static state analysis and dynamic transient analysis. The purpose of static state analysis is to ensure that the designed electrical power supply system can operate stable under normal conditions. If the electrical power supply system does not pass this static safety verification, components such as the power factor correction (PFC) unit, capacitors, or cables may be added or replaced. Dynamic transient analysis focuses on the stability of the electrical power supply system in response to emergencies or operational changes. If the electrical power supply system fails this verification, its stability can be enhanced by incorporating additional power equipment such as a static VAR compensator (SVC) or other protective equipment.

Finally, a check is made to determine whether the initial set of electrical equipment passes all required examinations. If it passes the examinations, the initial set of electrical equipment is proposed to the user as the configuration of the electrical power supply system. If the examinations are not passed, electrical equipment is added or changed based on predetermined rules and/or based on the experience of prior projects (using Al) and the simulations are run again.

In one use case, the electrical power supply system is configured by the process for robustness based on a worst-case scenario. The worst-case scenario often corresponds to the worst operating conditions, for example, system maximum load operating point, maximum renewable energy output point, in which equipment of the industrial automation system is run in parallel at full speed without considering the sum, so that the electrical equipment of the power supply system is configured to provide enough energy to supply all equipment of the industrial automation system in parallel.

In another use case, the process considers peak shaving or load shifting opportunities and thus dimensions the electrical power supply system smaller, and thus less robust, but at lower cost.

Alternative scenarios may be simulated to see what the differences are and how much cost could be saved with which alternative. In the case that data on costs are available for the electrical equipment, vide cost information for the different scenarios can be provided.

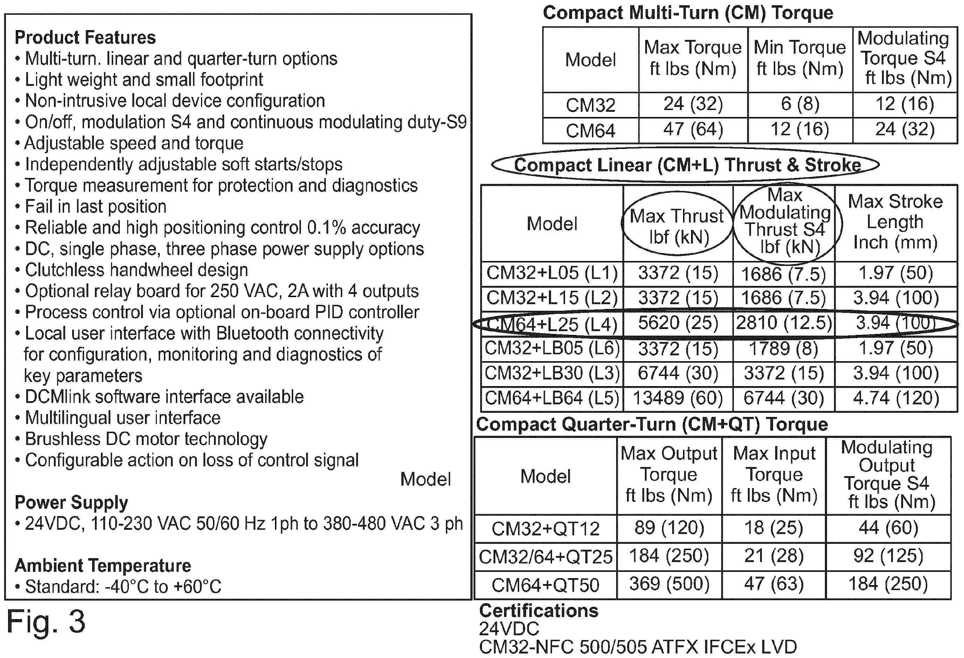

FIG. 3 illustrates a portion of a datasheet labelled by a user for use as training data. The datasheet forms part of a brochure which relates to electric actuators. On page 3 of 8, the brochure provides tables specifying parameters for different actuators. In an example, the Al-based algorithm is trained first to select the correct table depending on the component type, and then to select the correct model in the table (line), based on labels provided by the user, as shown in the figure. In another example, the Al-based algorithm is trained to identify the model name directly from the table as the model names are unique between tables. Depending on the model, different parameters (described in the column names) are specified, such as those as illustrated in FIG. 3 for linear or multi-turn actuators. Thus, the model needs to fit the actuator type. Finally, the unit of measurement has to fit or a conversion is made. In the non-limiting example illustrated in FIG. 3, values for the parameter "Max Thrust" for the model LM64+L25(L4) are specified in two different units (Ibf and kN). In case just one (either Ibf or kN) is given but the other one is required (or from Newton to kilo-Newton or vice versa), a conversion is made.

Described herein is a dimensioning process in which datasheets are fed as they are, e.g. as pdf, into an Al-based algorithm, along with a motor and component list. This algorithm is able to handle different input formats like text files (e.g. Word), pdf, list-based files like Excel-tables, extractions from a database or digital formats like AAS. As the components typically come from different vendors, it is expected that the data is differently structured or formatted. Based on the motor and component list, the algorithm may retrieve the fitting datasheets automatically. The datasheets may be retrieved over the Internet, for example from different vendor pages, from a server, or locally using a certain file path or by the user providing files. The algorithm extracts the required information from the datasheets automatically. Using the extracted information, a model is set up for every component in the motor and component list. Using the selected models, an initial electrical power supply system is set up that supplies the components of the industrial automation system with electrical power. The initial electrical system is set up according to rules and possibly also according to learnings from prior projects. This initial electrical system is than simulated and examined to determine whether it fulfils requirements. If it fulfils the norm, this is the output. If it does not fulfil the norm, electrical equipment may be added or changed and the system simulated again.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disc storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-chip systems (SOCs), complex programmable logic devices (CPLDs), etc.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A computer-implemented data preparation process for the dimensioning of an electrical power supply system for an industrial automation system, the process comprising:
obtaining a component datasheet for at least one component of the industrial automation system;
using a machine learning algorithm to extract dimensioning-relevant data from the obtained component datasheet; and
selecting an appropriate component model for the component based on the extracted dimensioning-relevant data.

2. The process as claimed in claim 1, wherein obtaining the component datasheet comprises accessing a data source where component datasheets for components of the industrial automation system are obtainable.

3. The process as claimed in claim 1 or 2, wherein the machine learning algorithm is trained to process component datasheets having various formats.

4. The process as claimed in any preceding claim, wherein the machine learning algorithm employs at least one of the following data extraction techniques to extract the dimensioning-relevant data: text or image recognition; natural language processing (NLP), optical character recognition (OCR); regular expression pattern; rule-based algorithm; large language model (LLM); classification algorithm; pattern-recognition algorithm; process mining algorithm; generative AI algorithm.

5. The process as claimed in any preceding claim, further comprising storing the extracted dimensioning-relevant data for the at least one component in data storage for future use in relation to another component of the same type.

6. The process as claimed in any preceding claim, wherein the component model comprises at least one of the following: a dedicated model for the component; a dedicated model for a type of the component; a generic model for the component; a generic model for the type of the component; a timeseries; a value of at least one parameter describing the component.

7. The process as claimed in any preceding claim, wherein selecting the appropriate component model comprises selecting, from a plurality of available component models, the most accurate component model for the at least one component that is available and usable.

8. The process as claimed in any preceding claim, wherein selecting the component model comprises using generative AI to generate a component model for the at least one component and selecting the generated component model.

9. A process for dimensioning an electrical power supply system for an industrial automation system, the process comprising:
carrying out the data preparation process as claimed in any preceding claim;
simulating power supply by the electrical power supply system to the industrial automation system using the selected component model; and
dimensioning the electrical power supply system to determine a configuration thereof that meets at least one requirement based on the simulation.

10. The process as claimed in claim 9, wherein simulating power supply by the electrical power supply system comprises undertaking at least one examination to determine whether the electrical power supply system meets the at least one requirement.

11. The process as claimed in claim 10, wherein the at least one requirement states one or more of the following: that the electrical power supply system is to be operable in the worst-case scenario; that the electrical power supply system is to reduce or minimize operating costs; that the electrical power supply system is to utilize at least one source of renewable energy or at least one energy storage that is available in the electrical power supply system.

12. The process as claimed in any preceding claim, wherein the dimensioning comprises setting up an initial electrical power supply system to be simulated, and either accepting or modifying the initial electrical power supply system based on its simulated performance, wherein the initial electrical power supply system is set up according to one or more predetermined rules.

13. The process as claimed in claim 12, wherein:
if the initial electrical power supply system fulfils the at least one requirement, the initial electrical power supply system is accepted; or
if the initial electrical power supply system does not fulfil the at least one requirement, the initial electrical power supply system is modified, and the modified electrical power supply system is then simulated and its performance reevaluated.

14. A computing system configured to carry out the process as claimed in any preceding claim.

15. A computer-readable medium comprising instructions which, when executed by a computing system, cause the computing system to carry out the process as claimed in any of claims 1-13.
